# EUROPEAN PATENT APPLICATION

(11) **EP 1 939 064 A1**
(43) Date of publication of application: **02.07.2008**
(21) Application number: 06811963.5
(22) Date of filing: 18.10.2006
(51) Int. Cl.: B62D 1/19, B62D 1/18

(54) **STEERING COLUMN DEVICE**

(30) Priority: 18.10.2005 JP 2005303153; 21.11.2005 JP 2005335890
(71) Applicant: NSK Ltd., Tokyo 141-8560 (JP)
(72) Inventor: SHIBAZAKI, Hiroshi c/o NSK Ltd., Kanagawa 251-8501 (JP); YAMADA, Yasuhisa c/o NSK Ltd, Gunma 371-8528 (JP)
(74) Representative: Grünecker, Kinkeldey, Stockmair & Schwanhäusser Anwaltssozietät
(86) International application number: PCT/JP2006/320770
(87) International publication number: WO 2007/046436

(57) **Abstract**

Since a fixed piece 7 is attached to a fixed bracket 1 by means of bolts BT, BT, the impact force by which sliding of a skid bracket 2 is started can be arbitrarily set by adjusting tightening force of the bolts BT, BT.

## Description

### Technical Field

The present invention relates to a steering column device which absorbs impact force in the secondary collision, and more particularly to a steering column device which provides comfortable steering performance to a driver and also enhances safety by reconciling functions of giving high rigidity to a steering column and of letting the steering column absorb impact energy surely, which are contrary.

### Background Art

A steering column device is an important safety and security member for a vehicle. In order to secure driver's safety at the time of a vehicle collision, it is very important how the action of the steering column device at the time of the vehicle collision is controlled. Usually, the steering column device itself is provided with an impact energy absorption mechanism, and also plays an important part as a support member of an air bag housed in a steering wheel.

Heretofore, various impact energy absorption mechanisms have been proposed. Most of them is aiming chiefly at is how the impact energy in the collision is absorbed. When the impact energy absorption mechanism is mounted on a vehicle, it is necessary to fix a steering shaft with high rigidity in the normal driving time and to absorb the predetermined energy quickly in the collision. Hereby, when the driver operates a steering wheel supported with high rigidity, drive feeling can be enhanced, and the shock which the driver receives in the collision can be effectively reduced. However, since these two characteristics are contrary, it is usually difficult to reconcile them. Namely, when the steering shaft is fixed with high rigidity, the energy absorption mechanism becomes difficult to operate in the collision, or unnecessary resistance acts on the energy absorption mechanism and the energy absorption becomes unstable. To the contrary, when an attempt to perform the energy absorbing action stably and surely is made, the support of the steering shaft becomes loose and the rigidity lowers, so that there is fear that the drive feeling may worsen.

Problems in the related arts will be more specifically described. In Patent Document 1, a steering column device has been disclosed, in which a pair of column clamping and fixing parts are arranged on the vehicle forward side of a pair of flat plate-shaped support wall parts, whereby the direction where a vehicle body mounting bracket support wall part and the column clamping and fixing parts start to move in the secondary collision is made substantially horizontal to stabilize the start of the movement.
Patent Document 1: Japanese Patent Unexamined Publication JP-A-2004-161021

### Disclosure of the Invention

### Problems that the Invention is to Solve

According to the technology in the Patent Document 1, the movement of the steering column is started by the forward movement of a tilt pivot bolt for fixing the steering column to the vehicle body at the lower end. Therefore, in order to enhance support rigidity of the steering column, it is necessary to increase the tightening force of the tilt pivot bolt. However, in this case, timing in which the steering column starts to move is delayed in the secondary collision. On the other hand, when the tightening force for the tilt pivot bolt is decreased in order to quicken the start of the movement of the steering column, the support rigidity of the steering column lowers.

The invention has been made in view of such the problems in the conventional technology, and it is an object of the invention to provide a steering column device which can reconcilably have support rigidity of a steering column and impact energy absorbing characteristic which is stabilized by control.

### Means for Solving the Problems

A steering column device of the invention including: a steering shaft coupled to a steering wheel;
a column housing which supports the steering shaft rotatably;
a fixed bracket to be fixed to a vehicle body;
a skid bracket which is arranged movably with respect to the fixed bracket in a substantially axial direction of the steering shaft and supports the column housing;
an energy absorption mechanism which is arranged between the fixed bracket and the skid bracket and acts in accordance with the relative movement of the two brackets;
a pressing member which is attached to one of the fixed bracket and the skid bracket and pressed against the other of them; and
an adjusting unit which adjusts pressing force of the pressing member for the other bracket.

### Advantage of the Invention

According to the steering column device of the invention, the skid bracket which is arranged movably with respect to the fixed bracket in the substantially axial direction of the steering shaft and supports the column housing is provided, and the pressing of the pressing member which is attached to one of the fixed bracket and the skid bracket and pressed against the other of them is adjusted by the adjusting unit. Hereby, high support rigidity of the column housing and the stable impact energy absorption are reconciled.

It is preferable that the pressing force of the pressing member is adjusted to generate such frictional force between the fixed bracket and the skid bracket that the skid bracket moves with respect to the fixed bracket when the force equal to or more than a predetermined value in the substantially axial direction of the steering shaft acts, and that the skid bracket does not move with respect to the fixed bracket when the force less than the predetermined value acts.

It is preferable that the pressing member includes a taper surface which comes into surface contact with the other bracket; the adjusting unit includes a screw for attaching the pressing member to one of the brackets; and the screwing amount of the screw for one of the brackets is adjusted to change contact pressure between the other bracket and the taper surface.

It is preferable that frictional force produced between the other and the taper surface is managed so as to become a predetermined value by setting at least one of material, surface treatment, roughness, a shape, and hardness in the other and the taper surface.

It is preferable that a means for setting the frictional force to become the predetermined value is interposed between the other and the taper surface so that the optimum frictional force can be set. The "unit which sets the frictional force to become the predetermined value" includes all means such as a lubricant or wax exiting between the other and the taper surface, and a plate subjected to coating.

It is preferable that the energy absorption mechanism includes a bent wire, a bent plate, or a plate having a cut line. It is preferable that the energy absorption mechanism is provided between the skid bracket and the fixed bracket.

It is preferable that the energy absorption mechanism is an extendable mechanism provided for the column housing.

It is preferable that the energy absorption mechanism is an extendable mechanism provided for the steering shaft.

It is preferable that the column housing is attached to the skid housing so that its position in at least one of a telescopic direction and a tilt direction is can be adjusted.

It is preferable that the steering column device is so constructed that the screw is attached from the vehicle body side to the fixed bracket through the pressing member.
It is preferable that the steering column device is so constructed that the skid bracket is interposed and supported between the vehicle body and the fixed bracket.

It is preferable that the steering column device is so constructed that the skid bracket has an overhanging part which extrudes to the fixed bracket, the fixed bracket has a guide groove which embraces the overhanging part, and the overhanging part comes into contact with only the guide groove of the fixed bracket and is held by the guide groove.

In this description, the "telescopic direction" means an axial direction of the steering shaft, and the "tilt" direction means a direction which intersects the telescopic direction (particularly, up-down direction).

### Brief Description of the Drawings

Fig. 1 is an exploded perspective view of a steering column device according to an embodiment of the invention;
Fig. 2 is a perspective view of the steering column device according to the embodiment, viewed from the lower side;
Fig. 3 is a perspective view of the steering column device according to the embodiment at the usual time;
Fig. 4 is a perspective view of the steering column device at the time of impact energy absorbing according to the embodiment;
Fig. 5 is a diagram when the constitution in Fig. 2 is cut by a surface including a line V-V and seen in a direction of an arrow;
Fig. 6 is a sectional view in a second modified example of the embodiment, which is similar to that in Fig. 5;
Fig. 7 is a diagram showing a state where the steering column device in the embodiment is assembled in a not-shown vehicle body;
Fig. 8 is a diagram showing a state where a steering column device in a first modified example of the embodiment is assembled in a not-shown vehicle body;
Fig. 9 is a sectional view in a third modified example of the embodiment, which is similar to that in Fig. 5;
Fig. 10 is a sectional view in a fourth modified example of the embodiment, which is similar to that in Fig. 5;
Fig. 11A is a sectional view in a fifth modified example of the embodiment, which is similar to that in Fig. 5;
Fig. 11B is a diagram seen in a direction of an arrow B in Fig. 11A;
Fig. 11C is a diagram seen in a direction of an arrow C in Fig. 11A;
Fig. 12 is a sectional view in a sixth modified example of the embodiment, which is similar to that in Fig. 5;
Fig. 13A is a diagram showing a fixed bracket and a skid bracket in a seventh modified example of the embodiment; and
Fig. 13B is a diagram seen in a direction of an arrow B in Fig. 13A.

### Description of Reference Numerals and Signs

- 1: Fixed bracket
- 1a: Arm part
- 1b: Lower surface
- 1c: Lower surface
- 1d: Slant surface
- 1e: Slant surface
- 1e': Vertical surface
- 1f: Hole
- 1g: Projection
- 2: Skid bracket
- 2a: Top plate
- 2b: Support plate
- 2c: Overhanging part
- 2d: Tilt hole
- 2e: Arcuate part
- 3: Column housing
- 3a: Attachment part
- 3b: Telescopic hole
- 4: Lever shaft
- 5: Cam member
- 6: Nut
- 7: Fixed piece
- 7a: Taper surface
- 7a: Slant surface
- 7b: Bolt hole
- 7b': Vertical surface
- 8: Friction plate
- 9: Wire member
- 9a: First bending part
- 9b: Second bending part
- BT: Bolt
- LBT: Bolt or rivet or pin
- VB: Vehicle body
- FB: Intervention bracket
- FB1: Fixed bracket

### Best Mode for Carrying Out the Invention

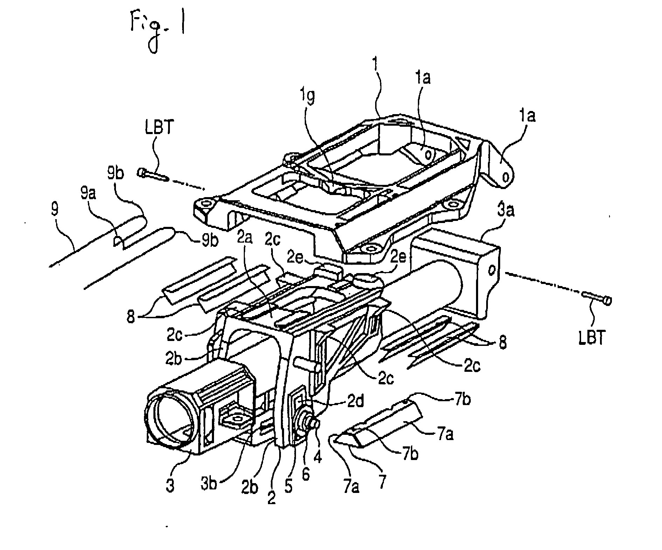

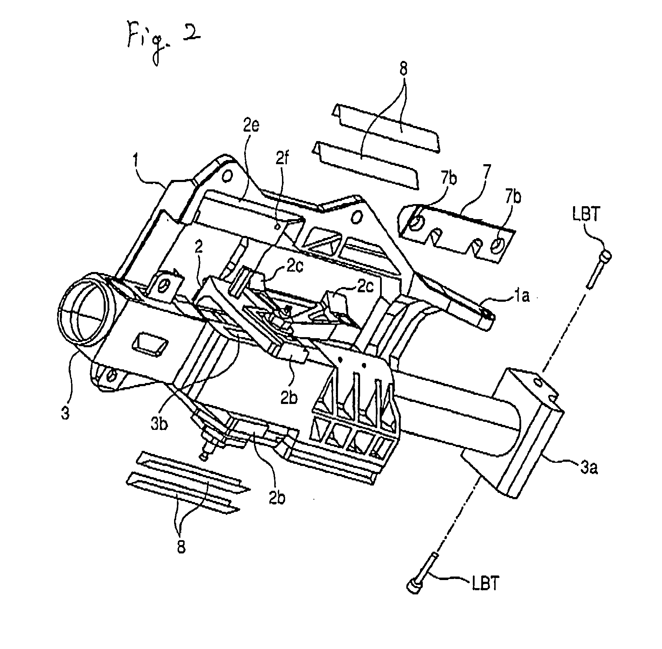

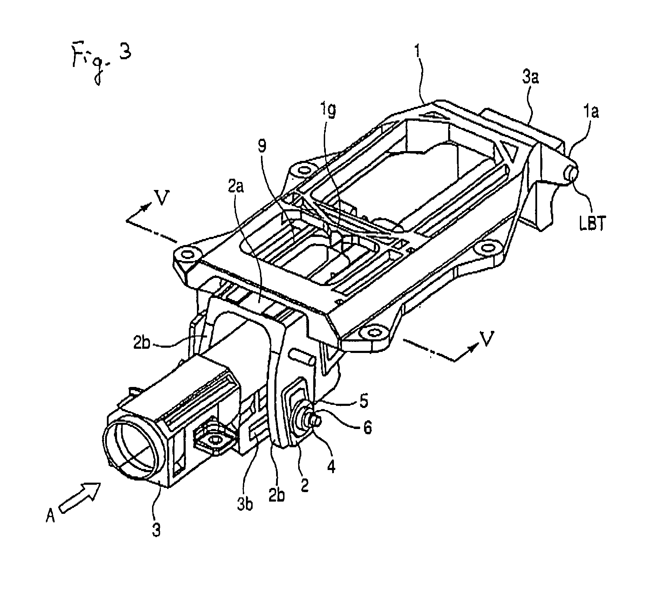

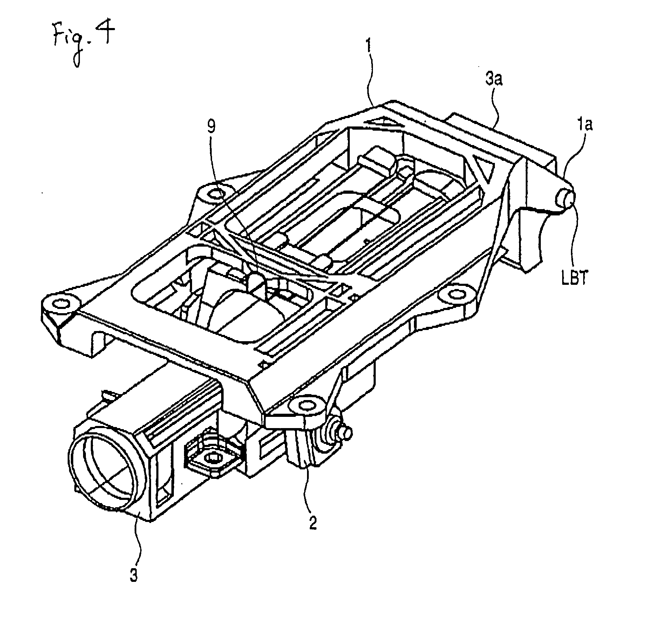

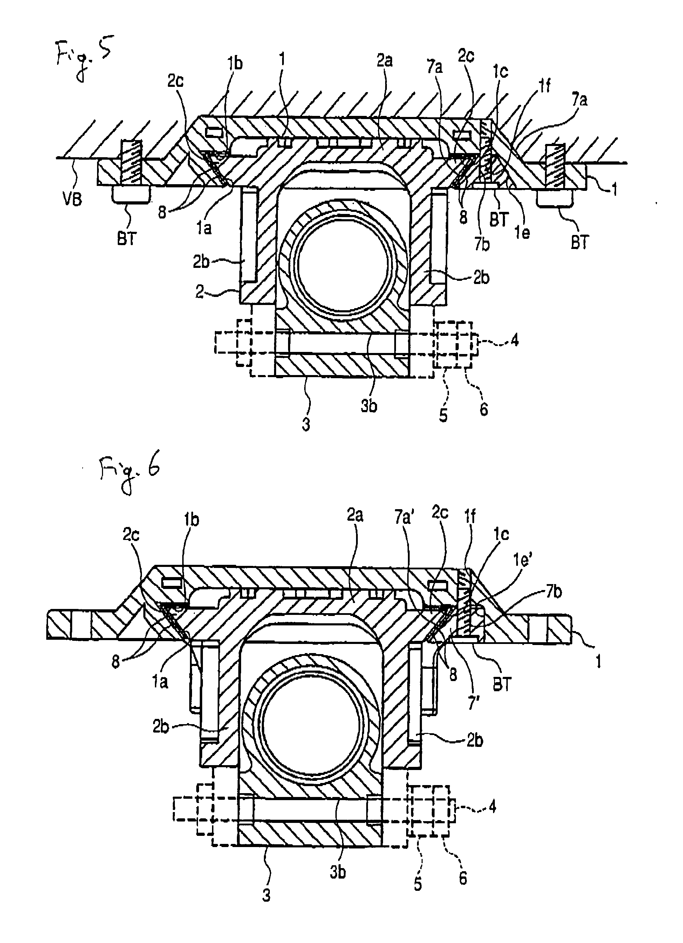

A tilt/telescopic type steering column device according to an embodiment of the invention will be described below with reference to drawings. Fig. 1 is an exploded perspective view of a steering column device according to an embodiment. Fig. 2 is a perspective view of the steering column device according to the embodiment, viewed from the lower side. Fig. 3 is a perspective view of the steering column device according to the embodiment at the usual time. Fig. 4 is a perspective view of the steering column device at the time of impact energy absorbing according to the embodiment. Fig. 5 is a diagram when the constitution in Fig. 2 is cut by a surface including a line V-V and seen in a direction of an arrow.

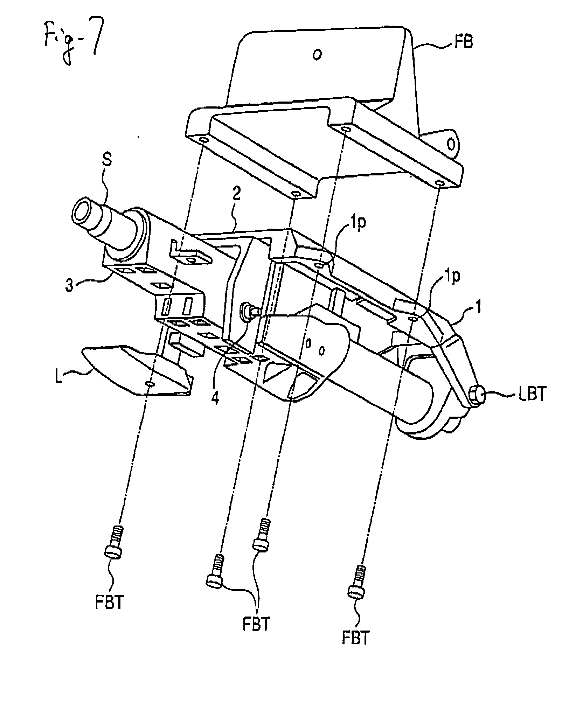

A fixed bracket 1 to be fixed to a vehicle body VB through an intervention bracket FB (refer to Figs. 5 and 7)is formed nearly in the shape of "θ", and has a pair of arm parts 1a, 1a on its vehicle forward side (back side in Fig. 1). Further, the fixed bracket 1 has a pair of slant surfaces 1d and 1e which connect respectively to lower surfaces 1b, 1c of the fixed bracket 1 and slant in the same direction. Below the fixed bracket 1, a skid bracket 2 is attached as described later.

As shown in Figs. 1 and 2, the skid bracket 2 has an inverse U-shaped section, in which support plates 2b, 2b are attached respectively to both side edges of a top plate 2a. On the outsides of the upper portions of the support plates 2b, 2b, overhanging parts 2c, 2c extending in the opposing direction are formed. The two overhanging parts 2c are provided in one support plate 2b, each overhanging part 2c is formed nearly in the shape of a right-angled triangle viewed in an axial direction of a column housing described later, and their two overhanging parts are superposed viewed in the axial direction of the column housing. Further the support plates 2b, 2b have respectively long tilt holes 2d, 2d extending up and down.

A cylindrical column housing 3 is arranged so as to be enveloped in the skid bracket 2. On the vehicle forward side of the column housing 3, a box-shaped attachment part 3a is formed. This attachment part 3a is attached to the arm parts 1a, 1a of the fixed bracket 1 through bolts LBT, LBT, or rivets, or pins. Further, a block part arranged below the column housing 3 has a long telescopic hole 3b extending in the axial direction. In the column housing 3, a not-shown steering shaft to which a not-shown a steering wheel is attached is rotatably supported by a not-shown bearing. Further, the column housing 3 has the constitution which is extendable in the axial direction.

In Fig. 1, a fixed piece 7 as a pressing member, which has the shape of a trapezoidal column, has a pair of taper surfaces 7a, 7a which come closer to each other upward, and bolt holes 7b, 7b formed between the taper surfaces 7a, 7a.

A mode of attaching the skid bracket 2 to the fixed bracket 1 will be described. A first bending part 9a in the center of a wire member 9 bend three-dimensionally as shown in Fig. 1 as an energy absorption member is engaged with a projection 1g provided for a beam in the center of the fixed bracket 1, and second bending parts 9b, 9b formed on both sides of the first bending part 9a are wounded around arcuate parts 2e, 2e of the skid bracket 2.

Further, the overhanging part 2c on the left side in Fig. 5 is fitted into a wedge-shaped space formed by the lower surface 1b and the slant surface 1d of the fixed bracket 1 while two thin friction plates 8, 8 bent at an angle is being interposed between the space and the overhanging part 2c. At this time, a space formed by the overhanging part 2c on the right side in Fig. 5, the lower surface 1c of the fixed bracket 1 and the slant surface 1e thereof is trapezoidal viewed in a direction of Fig. 5. When the fixed piece 7 is fitted into such the trapezoidal space in a state where two thin friction plates 8, 8 bent at an angle are wounded around the overhanging part 2c on the right side in Fig. 5, one of the taper surfaces 7a comes into contact with the lower surface of the overhanging part 2c through the friction plates 8, 8, and the other of the taper surfaces 7a comes into contact with the slant surface 1e Under this state, the bolts BT, BT are inserted into the bolt holes 7b, 7b, and screwed into screw holes 1f, 1f of the fixed bracket 1, whereby the skid bracket 2 is attached to the fixed bracket 1. Thereafter, a lever shaft 4 of which rotation is driven by a not-shown lever is inserted into the tilt hole 2b, the telescopic hole 3b, the tilt 2b, and a cam member 5, and screwed to a nut 6.

According to the embodiment, when the bolts BT, BT which are adjustment unit are tightened, since the fixed piece 7 comes close to the fixed bracket 1, the taper surfaces 7a, 7a of the fixed piece 7 press the lower surface of the overhanging part 2c and the slant surface 1e by the strong force. At this time, the fixed piece 7 is pressed horizontally by reaction force from the slant surface 1e Hereby, since the lower surface of the overhanging part 2c is pressed strongly, high frictional force is produced between the taper surface 7a and the lower surface of the overhanging part 2c, and the skid bracket 2 can be supported by the fixed bracket 1 with high rigidity. Accordingly, a driver can operate a steering wheel supported with high rigidity, and can obtain good drive feeling.

On the other hand, in the secondary collision, when impact force is input through the steering shaft from the steering wheel into which driver's body has run along a direction A shown in Fig. 3, the column housing 3 is pressed to the vehicle forward side by the strong force. When this impact force comes to a predetermined value or more, the force by which the column housing 3 is pressed forward overcomes the frictional force. Therefore, the overhanging parts 2c, 2c of the skid bracket 2, while being guided by the lower surfaces 1c, 1b of the fixed bracket which are substantially parallel to the axis of the steering shaft, the slant surface 1d, and the one-side slant surface 7a of the fixed piece 7, starts to slide, whereby stable impact absorption can be performed. At this time, since the column housing 3 is shortened or extended by the extendable mechanism, it does not obstruct the movement of the skid bracket 2. Since the friction member 8 which is an unit for adjusting the frictional force has, on its surface, coating which has a predetermined coefficient of friction, the stable slide of the skid bracket 2 is performed. Further, coating may be applied to both surfaces of the friction member 8 to use one friction member 8 on each of the right and the left. Furthermore, without providing the friction member 8, the overhanging parts 2c, 2c may be brought into direct contact with the lower surfaces 1c, 1b and the slant surface of the fixed bracket, and the one-side slant surface 7a of the fixed piece 7.

When the skid bracket 2 is displaced with respect to the fixed bracket 1 from the state shown in Fig. 3 to the state shown in Fig. 4, the distance between the projection 1g and the arcuate parts 2e, 2e widens. Therefore, plastic flow is produced so that the second bending parts 9b, 9b of the wire member 9 are displaced in a direction away from the first bending part 9a, whereby the impact energy can be absorbed.

According to the embodiment, the fixed piece 7 is attached to the fixed bracket 1 by means of the bolts BT, BT. Therefore, by adjusting the tightening force of the bolts BT, BT, the impact force by which sliding of the skid bracket 2 is started can be arbitrarily set.

Next, telescopic and tilt adjustment will be described. When an operator turns the not-shown lever in the regular direction, the lever shaft 4 rotates integrally. Simultaneously with the rotation of the lever shaft 4, the cam member 5 rotates. When the cam member 5 rotates in the regular direction, axial tension of the lever shaft 4 loosens. Therefore, the contact pressure between the column housing 3 and the support plates 2b, 2b of the skid bracket 2 reduced, so that the column housing 3 and the skid bracket 2 can move relatively.

In such the state, by changing the position of the lever shaft 4 relatively with respect to the tilt holes 2d, 2d and the telescopic hole 3b, the telescopic and tilt adjustment can be performed. At this time, with an axial line of bolts LBT, LBT for coupling the attachment part 3a of the column housing 3 and the arm parts 1a, 1a of the fixed bracket 1 as a center, the column housing 3 performs tilt movement.

When the operator turns the not-shown lever in the reverse direction to rotate the lever shaft 4 after such the adjustment, the cam member 5 rotates in the reverse direction, and the axial tension of the lever shaft 4 becomes high. Hereby, the contact pressure between the column housing 3 and the support plates 2b, 2b of the skid bracket 2 increases, so that the column housing 3 and the skid bracket 2 are fixed in a relative movement impossible state.

According to the above structure, all of the fixed bracket 1, the skid bracket 2, and the column housing 3 can be assembled from one direction. For example, when the positional relation turned upside down in Fig. 1 is considered, first, the fixed bracket 1 is attached to an assembly jig (not shown), the skid bracket 2 to which the wire member 9 has been attached is placed on the fixed bracket 1, then, the fixed piece 7 is attached, and the bolts BT, BT are tightened by a predetermined torque. By this procedure, the assembly is performed in one position and by one worker, so that the above structure is under the design by which a cell-type assembly can be realized by very inexpensive equipment investment.

Fig. 7 shows a diagram a state where the steering column device according to the embodiment is assembled in a not-shown vehicle body. In Fig. 7, the fixed bracket 1 of the steering column, device into which a steering shaft S has been inserted is attached to the not-shown vehicle body through an intervention bracket FB. More specifically, the fixed bracket 1 is fixed to the intervention bracket FB by bolts FBT inserted into through-holes 1p. The intervention bracket FB is fixed to the not-shown vehicle body by a bolt VBT. Further, a lever L is coupled to the steering column device so as to rotate integrally with the lever shaft 4.

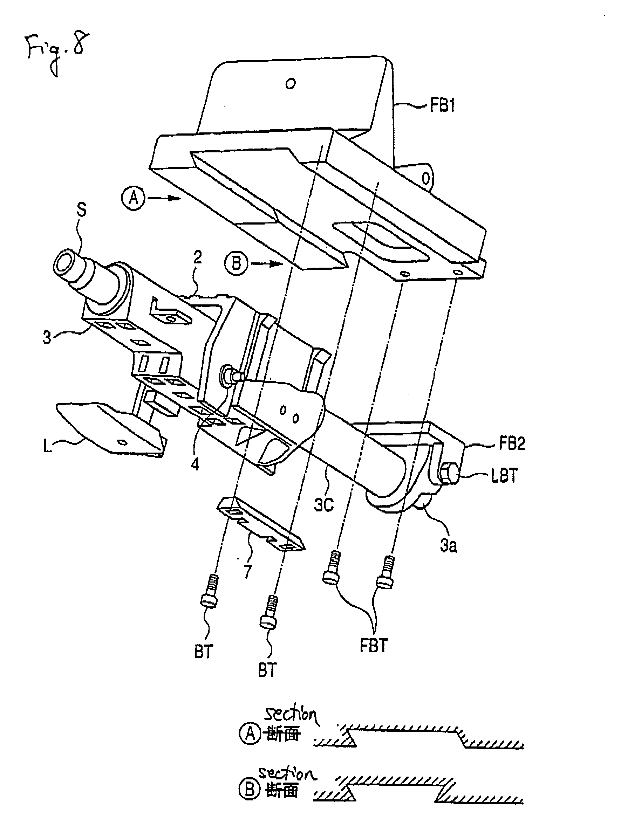

Fig. 8 is a diagram showing a state where a steering column device in a first modified example of the embodiment is assembled in a not-shown vehicle body. In this modified example, compared with the embodiment in Fig. 7, an intervention bracket and a fixed bracket are integrated. More specifically, the lower surface side of a fixed bracket FB1 has the structure similar to the structure of the fixed bracket in the above-mentioned embodiment. Accordingly, a skid bracket 2 is attached slidably through a fixed piece 7 by bolts BT. To an end portion of the fixed bracket FB1, an attachment part 3a for a column tube 3C which is extendable with respect to a column housing 3 is fixed through an end bracket FB2 by a bolt LBT, and further, the fixed bracket FB1 is fixed to the not-shown vehicle body by a bolt VBT. The fixed bracket FB1 may be attached directly to the attachment part 3a for the column tube 3C without using the end bracket FB2. According to this modified example, since the intervention bracket and the fixed bracket are integrated, the number of parts can be reduced, and the number of assembly steps is also reduced, so that low cost can be realized. Further, weight reduction of the steering device and provision of high rigidity for the steering device can be reconciled, and characteristic frequency becomes high, so that this steering device is advantageous also in vibration.

Fig. 6 is a sectional view in a second modified example of the embodiment, which is similar to that in Fig. 5. This modified example is different from the embodiment only in the shapes of a fixed bracket and a fixed piece. Components common to those in the embodiment are denoted by the same reference numerals, and the description of them are omitted.

More specifically, a fixed piece 7a' as a pressing member has a slant surface 7a' and a vertical surface 7b. On the other hand, a fixed bracket 1' has a vertical surface 1e' . The fixed piece 7' is attached so that its vertical surface 7b is opposed to the vertical surface 1e' of the fixed bracket 1' . According to this modified example, when a bolt BT that is an adjustment unit is tightened, the slant surface 7a' presses the lower surface of an overhanging part 2c of a skid bracket 2. Therefore, the skid bracket 2 can be surely fixed to the fixed bracket 1'.

In the above-mentioned embodiment and first and second modified examples, the fixed piece 7 is fixed, near the overhanging parts 2c, 2c, in two positions by the two bolts BT. However, the fixed piece 7 may be fixed at only an intermediate portion of the overhanging parts 2c, 2c by one bolt BT.

Further, the overhanging parts 2c, 2c may be formed so that the overhanging amount of a portion close to the not-shown steering wheel is made small. In this case, in accordance with this small overhanging amount, step portions can be formed in the lower surfaces 1c, 1d of the fixed bracket 1 and the slant surface 7a of the fixed piece 7. Hereby, after this overhanging part 2c has started to slide, the skid bracket 2 can stably move without being caught by the lower surfaces 1c, 1d of the fixed bracket 1 and the slant surface 7a of the fixed piece 7.
Particularly, in case that the respective surfaces are brought into direct contact with each other without providing the friction plates 8, 8, it is preferable that roughness of each of the overhanging parts 2c, 2c of the skid bracket 2, the lower surfaces 1c, 1d of the fixed brackets 1, and the slant surface 7a of the fixed piece 7 is managed within a predetermined range. In addition, it is preferable that a material, surface treatment, shape, and hardness of each of them are so managed that the frictional force comes to a predetermined value. Regarding the material, when the contact surfaces are formed of the same material, they are easy to adhere to each other. Therefore, it is also preferable that the contact surfaces are formed of the different material. Further, it is preferable that a coating surface, a lubricant, or wax is interposed between the contact surfaces to stabilize sliding friction.

The member, which is disposed between the skid bracket 2 and the fixed bracket 1, gives the plastic flow by means of the relative movement between the skid bracket 2 and the fixed bracket 1 in the secondary collision, and absorbs the impact energy by its resistance, does not need to be the wire member, but may be a plate member. Alternatively, in place of using the wire member, an impact energy absorbing function may be provided for the extendable mechanism of the column housing 3, or the impact energy absorbing function may be provided for the not-shown steering shaft.

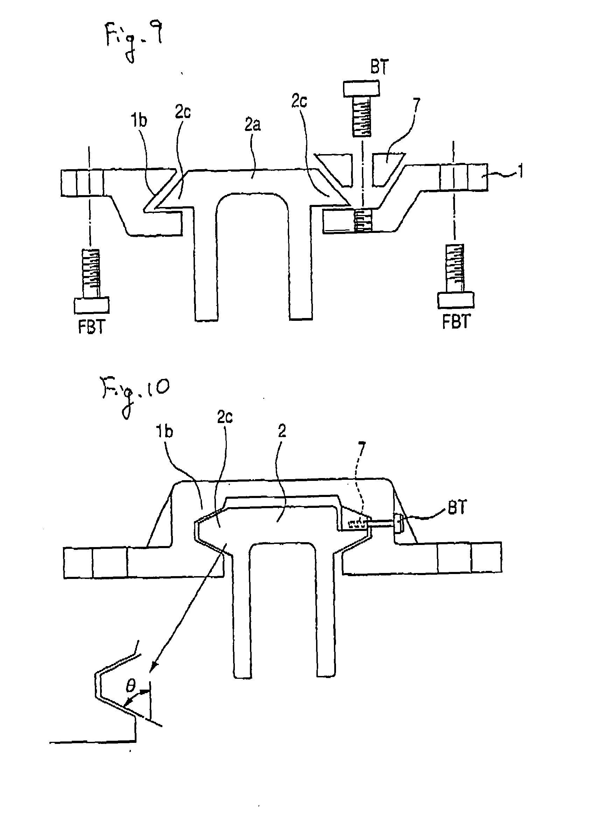

Fig. 9 is a sectional view in a third modified example of the embodiment, which is similar to that in Fig. 5.
In Figs. 5 and 6, if the bolt BT itself or the bolt attachment part is damaged by the impact in the collision, there is a possibility that the skid bracket 2 may detach from the fixed bracket 1. In order to avoid such the risk, as shown in Fig. 9, a triangle formed by a lower surface 1b of a fixed bracket 1 and an overhanging part 2c of a skid bracket 2 may be constituted so as to be inverse to the triangle in the embodiment shown in Fig. 5. In this case, a fixed piece 7 should be also attached from the reverse direction to the direction in the constitution shown in Fig. 5. Namely, the fixed piece 7 in Fig. 5 is attached to the fixed bracket 1 from the skid bracket 2 side, whereas the fixed piece 7 in the third modified example in Fig. 9 is attached to the fixed bracket 1 from the vehicle body VB side. Even when the bolt BT or the bolt attachment part is damaged under such the constitution, the skid bracket 2 does not detach from the fixed bracket 1.

Fig. 10 is a sectional view in a fourth modified example of the embodiment, which is similar to that in Fig. 5.
By tightening the bolt BT from the upside as shown in Fig. 9, even if the bolt BT or the vicinity of the bolt BT attaching internal thread portion of the fixed bracket 1 is damaged in collision, it is possible to prevent the steering column from detaching downward. However, if the bolt BT or the bolt BT attaching internal thread portion of the fixed bracket 1 is damaged, there is a possibility that the steering column may be pushed up.
Therefore, when the shape of a guide groove 1c of the fixed bracket is set so as to embrace the skid bracket 2 from both sides as shown in Fig. 10, the impact is difficult to be applied to the bolt BT portion in the collision. Further, if the bolt BT or the bolt BT attaching internal thread portion of the fixed bracket 1 is damaged, since an overhanging part 2c of a skid bracket 2 is embraced by the guide groove 1c of the fixed bracket 1, the skid bracket 2 does not detach downward and is not pushed up. In this case, the bolt BT is tightened from the lateral side in assembly.
In the fourth modified example, the overhanging part 2c is formed in such a convex shape that its entirety overhangs to the side surface of the fixed bracket 1. The guide groove 1c of the fixed bracket 1 is formed so as to embrace the entirety of this overhanging part 2c. Namely, the overhanging part 2c comes into contact with only the guide groove 1c and is held by the guide groove 1c. Since the fixed bracket 1 thus embraces the entirety of the overhanging part 2c, a center of gravity of the skid bracket 2 can be housed in the embrace space of the fixed bracket 1, so that the skid bracket 2 can be stably fixed. Further, compared with the lower surface of the fixed bracket 1 in the third modified example 3 in Fig. 9, the lower surface thereof in the fourth modified example is flushed. Therefore, reduction of a manufacturing cost can be expected.

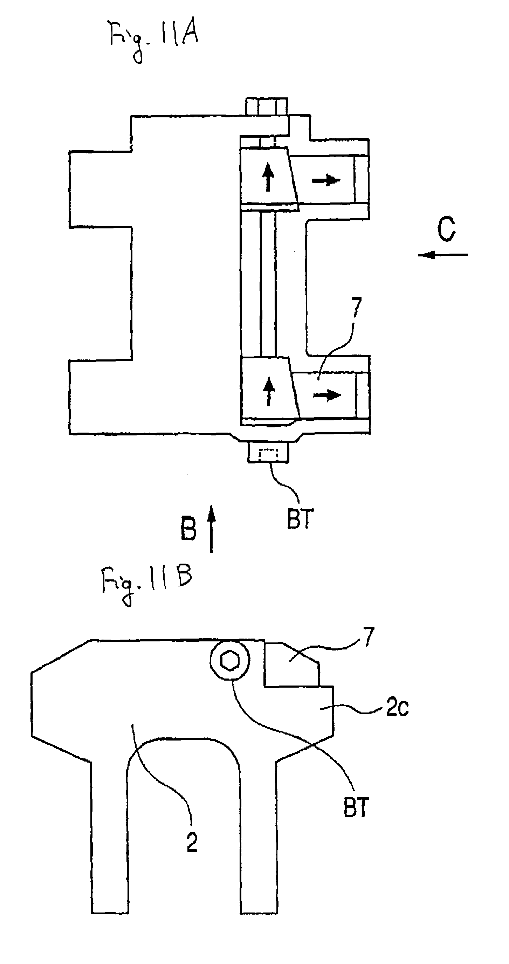

Fig. 11A is a sectional view in a fifth modified example of the embodiment, which is similar to that in Fig. 5.

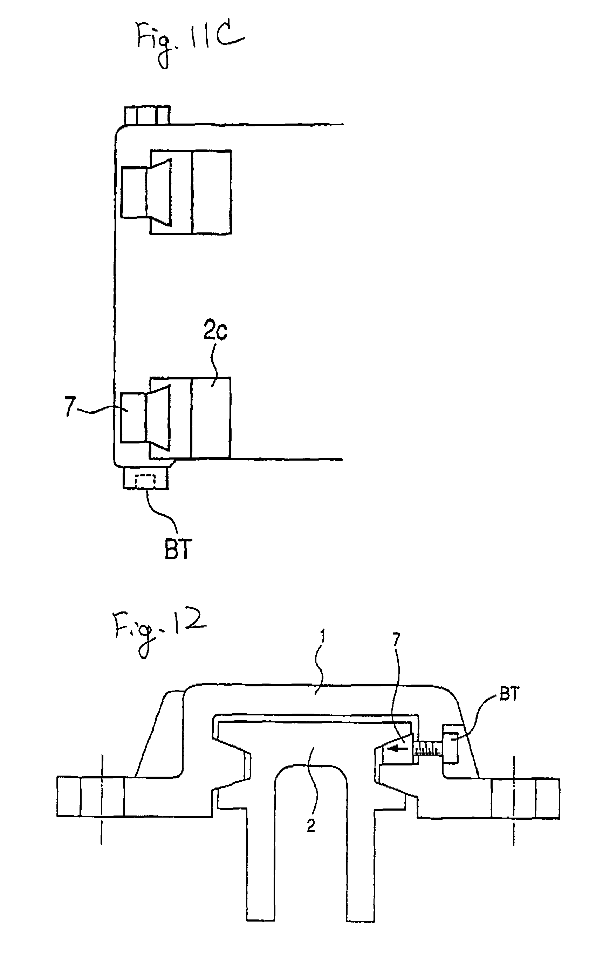

Fig. 11B is a diagram seen in a direction of an arrow B in Fig. 11A, and Fig. 11C is a diagram seen in a direction of an arrow C in Fig. 11A.
In case of the constitution in Fig. 10, after the skid bracket 2 and the fixed piece 7 have been inserted into the guide groove 1c of the fixed bracket 1, it is necessary to insert the bolt BT from the lateral side of the fixed bracket 1 and tighten the bolt BT.
However, considering assembling capability of the steering column, it is preferable that the bolt BT is tightened from the front side of the steering column.
In consideration of this point, Fig. 11 shows a modified example in which a steering column device is so constituted that a bolt BT is tightened from the front side of the steering column.
In order to increase the assembling capability, in a skid bracket 2, an additional wedge piece and a bolt BT are previously incorporated in the axial direction. Hereby, by simply inserting the skid bracket 2 into a guide groove 1b of a fixed bracket 1 and thereafter tightening the bolt BT from the front side of the steering column, the assembly can be performed.

Fig. 12 is a sectional view in a sixth modified example of the embodiment, which is similar to that in Fig. 5.
In this modified example, the angle given to the guide groove 1c of the fixed bracket 1 in Fig. 10 and the angle given to the skid bracket 2c in Fig. 10 are reversed, and a fixed piece 7 is pushed in by the bolt BT. The sixth modified example may be so constituted that the bolt is tightened from the front side of the steering column like the fifth embodiment 5 in Fig. 11.
Further, although an internal thread for the bolt BT in Fig. 10 is formed in the fixed piece 7, an internal thread in Fig. 12 is formed in the fixed bracket 1.

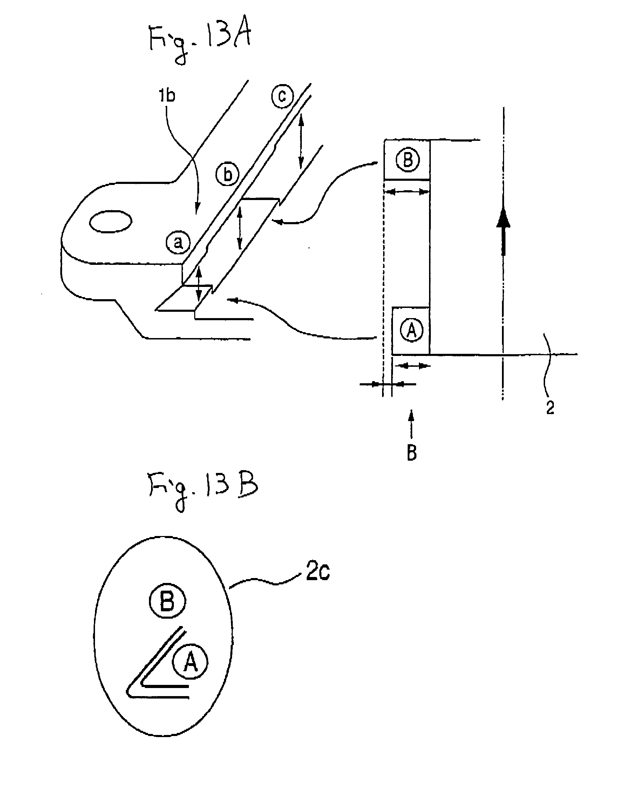

Fig. 13A is a perspective view of a fixed bracket 1 in a seventh modified example of the embodiment. This drawing includes a top view of a skid bracket 2. The skid bracket 2 is inserted into the fixed bracket 1 in a direction of an arrow in the figure which extends in the nearly lateral direction. Further, arrows in the center of the figure show moving directions of the skid bracket. Fig. 13B is a diagram seen from a direction of an arrow B in Fig. 13A, which shows sectional shapes of an (A) portion and a (B) portion of the skid bracket.
When the sectional shape of an overhanging part 2c of the skid bracket 2 is the same as the sectional shape of a guide part 1b of the fixed bracket 1, when the overhanging part 2c (A) of the skid bracket 2 comes near a guide groove 1c (b) of the fixed bracket, the guide groove 1c(b) obstructs the movement of the skid bracket 2. Therefore, the overhanging amount of the overhanging part 2c(A) is made small, and the sectional shape of the guide groove 1c(a) portion is made also small in accordance with the overhanging amount, whereby interference between the overhanging part 2c (A) and the guide groove 1c (b) of the fixed bracket is eliminated.
Similarly, it is necessary to set the sectional shape of the guide part 1b(c) of the guide part 1b larger than the over hanging part 2c(A) or 2c(B) so as not to obstruct the movement of the overhanging parts 2c(A), 2c(B) of the skid bracket 2.

The steering column device of the invention may be so constructed that after the assembly, the fixing condition of the skid bracket can be adjusted or reassembly is possible.

As mentioned above, although the invention has been explained in detail with reference to the embodiment, the invention should not be interpreted to be limited to the above embodiment but may be appropriately changed or improved within a range which does not impair the gist of the invention. For example, in place of the wire member 9, a bent plate material or a plate material having a cut line can be used. The invention is effective also to a steering column device having no tilt mechanism or telescopic mechanism.

Although the invention has been described in detail or with reference to the specified embodiment, it is apparent to those skilled in the art that various changes andmodifications can be added without departing from the spirit and scope of the invention.
This invention is based on Japanese Patent Application (No. P.2005-303153), filed on October 18, 2005, and Japanese Patent Application (No. P.2005-335890), filed on November 21, 2005, the contents of which are hereby incorporated by reference.

### Industrial Applicability

According to the invention, a steering column device is provided, which can reconcilably have support rigidity of a steering column and impact energy absorbing characteristic which is stabilized by control.

## Claims

1. A steering column device comprising:
a steering shaft coupled to a steering wheel;
a column housing which supports the steering shaft rotatably;
a fixed bracket fixed to a vehicle body;
a skid bracket which is disposed movably with respect to the fixed bracket in a substantially axial direction of the steering shaft and supports the column housing;
an energy absorption mechanism which is disposed between the fixed bracket and the skid bracket and acts in accordance with a relative movement of the two brackets;
a pressing member which is attached to one of the fixed bracket and the skid bracket and pressed against the other of them; and
an adjusting unit which adjusts pressing force of the pressing member for the other bracket.

2. The steering column device according to Claim 1, wherein
the pressing force of the pressing member is adjusted to generate such frictional force between the fixed bracket and the skid bracket that the skid bracket moves with respect to the fixed bracket when the force equal to or more than a predetermined value in the substantially axial direction of the steering shaft acts, and that the skid bracket does not move with respect to the fixed bracket when the force less than the predetermined value acts.

3. The steering column device according to Claim 1, wherein
the pressing member includes a taper surface which comes into surface contact with the other bracket;
the adjusting unit includes a screw for attaching the pressing member to one of the brackets; and
the screwing amount of the screw for one of the brackets is adjusted to change contact pressure between the other bracket and the taper surface.

4. The steering column device according to Claim 3, wherein
frictional force produced between the other bracket and the taper surface is managed so as to become a predetermined value by setting at least one of material, surface treatment, roughness, shape, and hardness in the other bracket and the taper surface.

5. The steering column device according to Claim 3, wherein
an unit which sets the frictional force to become the predetermined value is interposed between the other bracket and the taper surface.

6. The steering column device according to Claim 1, wherein
the energy absorption mechanism includes a bent wire, a bent plate, or a plate having a cut line.

7. The steering column device according to Claim 1, wherein
the energy absorption mechanism is an extendable mechanism provided for the column housing.

8. The steering column device according to Claim 1, wherein
the energy absorption mechanism is an extendable mechanism provided for the steering shaft.

9. The steering column device according to Claim 1, wherein
the column housing is attached to the skid housing so that its position in at least one of a telescopic direction and a tilt direction is adjustable.

10. The steering column device according to Claim 3, wherein
the screw is attached from the vehicle body side to the fixed bracket through the pressing member.

11. The steering column device according to Claim 1, wherein
the skid bracket is interposed and supported between the vehicle body and the fixed bracket.

12. The steering column device according to Claim 1, wherein
the skid bracket has an overhanging part which extrudes to the fixed bracket;
the fixed bracket has a guide groove which embraces the overhanging part; and
the overhanging part comes into contact with only the guide groove of the fixed bracket and is held by the guide groove.
